# EUROPEAN PATENT APPLICATION

(11) **EP 4 489 521 A1**
(43) Date of publication of application: **08.01.2025**
(21) Application number: 22935845.2
(22) Date of filing: 19.04.2022
(51) Int. Cl.: H05B 6/12

(54) **INDUCTION HEATING-TYPE COOKTOP**

(30) Priority: 28.03.2022 KR 20220038185
(71) Applicant: LG Electronics Inc., Yeongdeungpo-gu Seoul 07336 (KR)
(72) Inventor: KWACK, Younghwan, Seoul 08592 (KR); SON, Seongho, Seoul 08592 (KR)
(74) Representative: Vossius & Partner Patentanwälte Rechtsanwälte mbB
(86) International application number: PCT/KR2022/005590
(87) International publication number: WO 2023/191170

(57) **Abstract**

A cooktop using an induction heating method according to an embodiment of the present disclosure includes a plate on which an object to be heated is placed, a working coil generating a magnetic field for heating the object to be heated, and an inverter configured to control current flowing through the working coil. The plate may include a supporter made of a non-metallic material, an intermediate heating body forming at least a part of an upper surface of a top plate, and an insulating material that is arranged to be in contact with at least one surface of the intermediate heating body.

## Description

### [Technical field]

The present disclosure relates to an induction heating type cooktop. More specifically, the present disclosure relates to the arrangement of heating plates and the structure of a top plate of an induction heating type cooktop that heats both magnetic and non-magnetic materials.

### [Background art]

Various types of cooking utensils are used to heat food in homes or restaurants. In the past, gas ranges that use gas as fuel were widely used, but recently, devices that heat objects to be heated, such as cooking containers such as pots, using electricity instead of gas have been popularized.

Methods for heating objects to be heated using electricity are largely divided into resistance heating methods and induction heating methods. The electrical resistance method is a method of heating an object to be heated by transferring the heat generated when current is passed through a metal resistance wire or a non-metallic heating element such as silicon carbide to the object to be heated (e.g., a cooking vessel) through radiation or conduction. In addition, the induction heating method is a method of applying a certain amount of high-frequency power to a coil, utilizing the magnetic field generated around the coil to generate an eddy current in the object to be heated made of metal components, thereby heating the object to be heated itself.

Recently, the induction heating method is mostly applied to cooktops.

On the other hand, these cooktops have a limitation that the heating efficiency for non-magnetic containers is very low compared to the heating efficiency for magnetic containers.

In the case of cooktops using an induction heating method, in order to improve the problem of very low heating efficiency for non-magnetic objects (e.g., heat-resistant glass, ceramics, etc.), the cooktop includes an intermediate heating body to which eddy current is applied, and the non-magnetic object can be heated through this intermediate heating body.

On the other hand, the intermediate heating body can be coated on the upper or lower surface of the top plate on which the object to be heated is placed. If the intermediate heating body is coated on the upper surface of the top plate, there is a disadvantage in that a separate protective layer is required to prevent damage to the intermediate heating body. In addition, if the intermediate heating body is coated on the lower surface of the top plate, there is still a problem of low heating efficiency due to heat loss from the intermediate heating body to the top plate when heating a non-magnetic object.

### [Detailed Description of the Invention]

### [Technical Problem]

The present disclosure is intended to minimize heat loss in which at least some of the heat generated from an intermediate heating body is transferred to a top plate in an induction heating type cooktop that is capable of heating both magnetic and non-magnetic bodies.

The present disclosure is intended to minimize the problem of the top plate being overheated due to the heat generated from the intermediate heating body being transferred to the top plate in the induction heating type cooktop capable of heating both magnetic and non-magnetic bodies.

The present disclosure is intended to improve heating efficiency for magnetic bodies while increasing minimum output for non-magnetic bodies in an induction heating type cooktop capable of heating both magnetic and non-magnetic bodies.

### [Technical Solution]

The induction heating cooktop according to the embodiment of the present disclosure may be configured with a top plate based on a plate including an intermediate heating body, an insulating material, and a supporter.

The induction heating cooktop according to the embodiment of the present disclosure may place the insulating material between the intermediate heating body and the supporter so that heat loss from the intermediate heating body to the supporter is minimized.

The induction heating cooktop according to the embodiment of the present disclosure intends to control the magnetic field coupling force of the intermediate heating body including the plate by controlling the phase of a plurality of coils.

The induction heating cooktop according to the embodiment of the present disclosure may include a plate on which an object to be heated is placed, a working coil that generates a magnetic field for heating the object to be heated, and an inverter that controls the current flowing through the working coil, and the plate may include a supporter made of a non-metallic material, an intermediate heating body that forms at least a portion of the upper surface of the top plate, and an insulating material that is arranged to be in contact with at least one surface of the intermediate heating body.

The insulating material may be arranged between the supporter and the intermediate heating body.

The insulating material may be arranged to surround at least a portion of the side and bottom surfaces of the intermediate heating body.

The insulating material may be arranged to surround an area excluding the upper surface of the intermediate heating body.

The supporter may be formed with a first receiving portion in which at least one of the intermediate heating body and the insulating material is received.

The first receiving portion may be formed as a groove.

The insulating material may be formed with a second receiving portion in which the intermediate heating body is received.

A horizontal cross-section of the second receiving portion may include a pattern shape having a closed loop.

A horizontal cross-section of the second receiving portion may have at least one ring shape.

The intermediate heating body includes a first heating element and a second heating element, and at least a portion of the insulating material may be placed between the first heating element and the second heating element.

The horizontal cross-section of the second receiving portion has a first ring shape having a diameter of a first length and a second ring shape having a diameter longer than the first length, and the first ring shape can be formed within the second ring shape.

The working coil includes first and second working coils, and the inverter can control the direction of current flowing in the first and second working coils.

The supporter can be formed at least partially of glass.

The maximum height of the insulating material can be lower than the maximum height of the supporter.

The maximum height of the insulating material can be the same as the maximum height of the supporter.

### [Effect of the invention]

According to the present disclosure, since the top plate is formed as a plate including an intermediate heating body, an insulating material, and a supporter, the heat of the intermediate heating body is not lost to the supporter or the like by the insulating material, but can be concentrated on the object to be heated, so there is an advantage of minimizing heat loss.

According to the present disclosure, since a part of the upper surface of the top plate is formed as an intermediate heating body made of a metal material that can be heated by a magnetic field, the heat of the intermediate heating body is directly transferred to the object to be heated, so there is an advantage of improving heating efficiency.

According to the present disclosure, since the coupling force between the intermediate heating body and the magnetic field changes depending on the phase of the plurality of coils, the heat generation amount of the intermediate heating body is controlled depending on the material of the object to be heated, so that the heating performance for each of the magnetic body and the non-magnetic body can be improved.

### [Brief description of the drawings]

FIG. 1 is a perspective view illustrating an induction heating cooktop.
FIG. 2 is a cross-sectional view illustrating an induction heating cooktop and an object to be heated.
FIG. 3 is a cross-sectional view illustrating an induction heating cooktop and an object to be heated.
FIG. 4 is a cross-sectional view illustrating an induction heating cooktop and an object to be heated.
FIG. 5 is a cross-sectional view illustrating a plate according to the first to third embodiments of the present disclosure.
FIG. 6 is a cross-sectional view illustrating a plate according to the fourth to sixth embodiments of the present disclosure.
FIG. 7 is a cross-sectional view illustrating a plate according to the seventh to eighth embodiments of the present disclosure.
FIG. 8 is a cross-sectional view of a plate according to the ninth embodiment of the present disclosure.
FIG. 9 is a cross-sectional view taken along line A-A' of Fig. 8.
FIG. 10 is a drawing illustrating a heating point when a cooktop according to an embodiment of the present disclosure heats an object to be heated.
FIG. 11 is a drawing illustrating a heating area when a cooktop according to an embodiment of the present disclosure heats an object to be heated.
FIG. 12 is a drawing illustrating various examples in which a working coil includes first and second working coils, and the first and second working coils are arranged in parallel.
FIG. 13 is a drawing illustrating various examples of intermediate heating bodies installed together when a plurality of working coils is arranged in parallel, as in the example of FIG. 12.

### [Best Mode for Carrying Out the Invention]

Hereinafter, a preferred embodiment according to the present disclosure will be described in detail with reference to the attached drawings. In the drawings, the same reference numerals are used to indicate the same or similar components.

Hereinafter, an induction heating cooktop and its operating method according to an embodiment of the present disclosure will be described. For convenience of explanation, "induction heating cooktop" will be referred to as "cooktop."

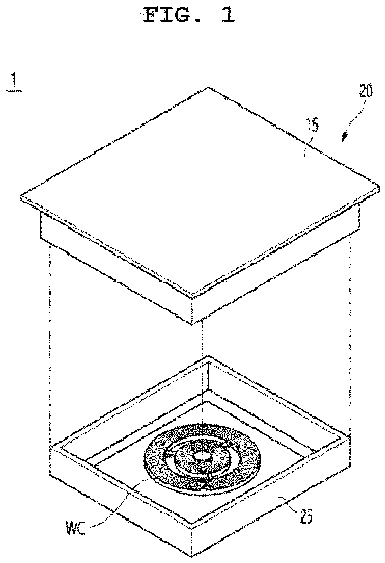

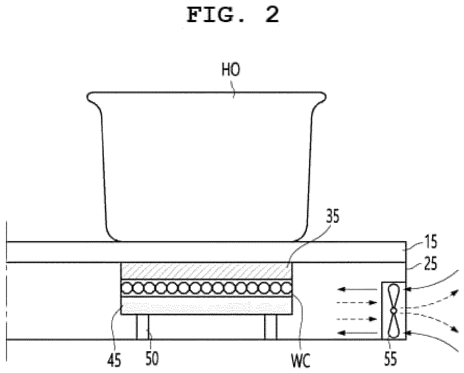

FIG. 1 is a perspective view illustrating an induction heating cooktop according to an embodiment of the present disclosure, and FIG. 2 is a cross-sectional view illustrating an induction heating cooktop and an object to be heated.

Referring to FIG. 1, an induction heating cooktop (1) may include a case (25), a cover (20), and a working coil (WC).

The case (25) may form an exterior of the cooktop (1). The case (25) can protect the components provided inside the cooktop (25) from the outside.

The inside of the case (25) may be provided with a working coil (WC), an inverter (not shown) that controls the current flowing through the working coil (WC), a resonant capacitor (not shown) that resonates with the working coil of the working coil (WC), a switch (not shown), etc. That is, the case (25) may be provided with other components related to the driving of the working coil (WC), i.e., various devices.

The cover (20) may be combined with the upper part of the case (25) to form the exterior of the cooktop (1) together with the case (25).

The cover (20) may be formed with a top plate (15) on which an object to be heated (HO), such as a cooking vessel, is placed. The object to be heated (HO) may be placed on the top plate (15).

The top plate (15) may be made of, for example, a glass material (e.g., ceramics glass).

In addition, the top plate (15) may be equipped with an input interface (not shown) that receives input from a user and transmits the input to a control module (not shown) for an input interface. Of course, the input interface may be equipped at a location other than the top plate (15).

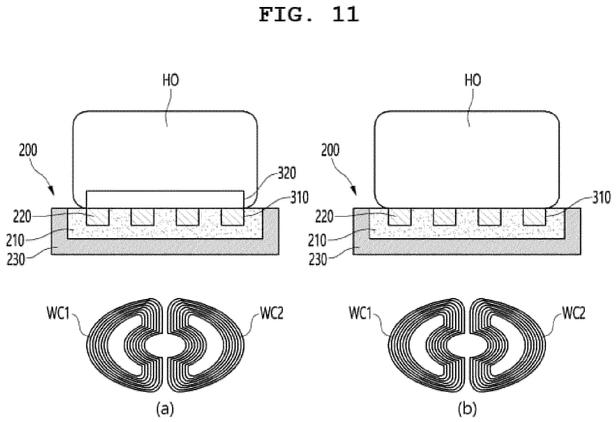

The working coil (WC) can generate a magnetic field to heat the object to be heated (HO) by passing through the object to be heated (HO). The working coil (WC) can generate a magnetic field that passes through the object to be heated (HO) or an intermediate heating body (IM) described later. The working coil (WC) can include a first working coil (WC1, see FIG. 11) and a second working coil (WC2, see FIG. 11). The inverter can control the direction of the current flowing through the first working coil (WC1, see FIG. 11) and the second working coil (WC2, see FIG. 11).

Referring to FIG. 2, the cooktop (1) can further include at least some or all of the insulating material (35), the shielding plate (45), the support member (50), and the cooling fan (55).

Meanwhile, this cooktop (1) has a limitation that only a magnetic material can be heated. That is, when a non-magnetic body is placed on the top plate (15), there is a disadvantage in that it is not heated because the coupling force between the magnetic field generated by the working coil (WC) and the non-magnetic body is very weak.

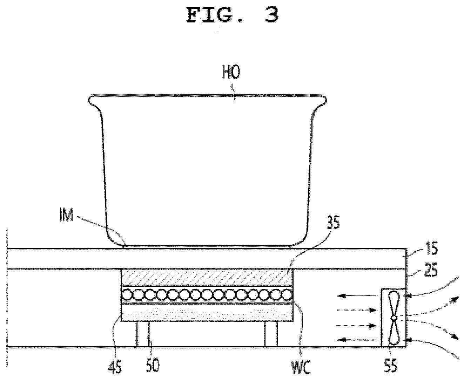

Accordingly, the cooktop (1) according to the embodiment of the present disclosure may further include an intermediate heating body (IM, see FIG. 3) for heating the non-magnetic body.

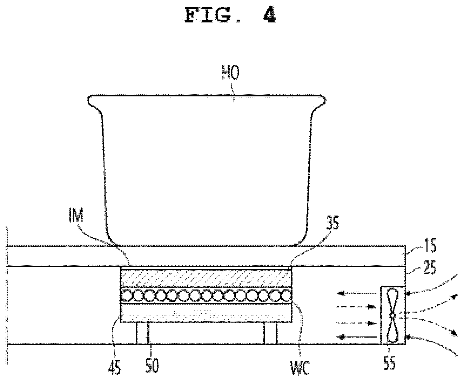

FIGS. 3 and 4 are cross-sectional views illustrating a cooktop of an induction heating method including an intermediate heating body according to an embodiment of the present disclosure and the object to be heated.

Specifically, FIG. 3 illustrates a form in which the intermediate heating body (IM) is coated on the upper surface of the top plate (15), and FIG. 4 illustrates a form in which the intermediate heating body (IM) is coated on the lower surface of the top plate (15).

The intermediate heating body (IM) may be a material having a resistance value that can be heated by the working coil (WC).

The thickness of the intermediate heating body (IM) may be inversely proportional to the resistance value (i.e., surface resistance value) of the intermediate heating body (IM). That is, the thinner the thickness of the intermediate heating body (IM), the higher the resistance value (i.e., surface resistance value) of the intermediate heating body (IM). Therefore, the intermediate heating body (IM) may be installed thinly on the top plate (15) so that its characteristics may be changed into a heatable load.

The thickness of the intermediate heating body (220) may be less than the skin depth or greater than the skin depth.

For reference, the intermediate heating body (IM) according to the embodiments of FIGS. 2 and 3 may have a thickness of, for example, 0.1 um to 1,000 um, but is not limited thereto.

The intermediate heating body (IM) with such characteristics exists to heat a non-magnetic body, and the impedance characteristics between the intermediate heating body (IM) and the object to be heated (HO) can change depending on whether the object to be heated (HO) placed on the top plate (15) is a magnetic body or a non-magnetic body.

The case where the object to be heated (HO) is a magnetic body is explained as follows.

The resistance component (R1) and the inductor component (L1) of the object to be heated (HO) form an equivalent circuit with the resistance component (R2) and the inductor component (L2) of the intermediate heating body (IM), and at this time, the impedance of the object to be heated (HO) that is magnetic (i.e., the impedance composed of R1 and L1) can be smaller than the impedance of the intermediate heating body (IM) (i.e., the impedance composed of R2 and L2). Accordingly, the magnitude of the eddy current (I1) applied to the magnetic object to be heated (HO) may be greater than the magnitude of the eddy current (I2) applied to the intermediate heating body (IM). Accordingly, most of the eddy current generated by the working coil (WC) is applied to the object to be heated (HO), so that the object to be heated (HO) can be heated. That is, when the object to be heated (HO) is a magnetic body, the equivalent circuit described above is formed so that most of the eddy current is applied to the object to be heated (HO), so that the working coil (WC) can directly heat the object to be heated (HO).

Next, the case where the object to be heated is a non-magnetic body is explained as follows.

When a non-magnetic object to be heated (HO) is placed on the top plate (15) and the working coil (WC) is driven, there is no impedance in the non-magnetic object to be heated (HO), but impedance may exist in the intermediate heating body (IM). That is, a resistance component (R) and an inductor component (L) may exist only in the intermediate heating body (IM). Accordingly, when a non-magnetic object to be heated (HO) is placed on the top plate (15) and the working coil (WC) is driven, the resistance component (R) and the inductor component (L) of the intermediate heating body (IM) may form an equivalent circuit. Accordingly, an eddy current (I) may be applied only to the intermediate heating body (IM), and no eddy current may be applied to the non-magnetic object to be heated (HO). More specifically, the eddy current (I) generated by the working coil (WC) is applied only to the intermediate heating body (IM), so that the intermediate heating body (IM) can be heated. That is, when the object to be heated (HO) is a non-magnetic body, the eddy current (I) is applied to the intermediate heating body (IM), so that the intermediate heating body (IM) is heated, and the non-magnetic object to be heated (HO) can be indirectly heated by the intermediate heating body (IM) heated by the working coil (WC). In this case, the intermediate heating body (IM) can be the main heating source.

In summary, regardless of whether the object to be heated (HO) is a magnetic body or a non-magnetic body, the object to be heated (HO) can be directly or indirectly heated by a single heat source called the working coil (WC). That is, when the object to be heated (HO) is a magnetic body, the working coil (WC) directly heats the object to be heated (HO), and when the object to be heated (HO) is a non-magnetic body, the intermediate heating body (IM) heated by the working coil (WC) can indirectly heat the object to be heated (HO).

However, as shown in FIG. 3, when the intermediate heating body (IM) is coated on the upper surface of the top plate (15), there is a risk that the intermediate heating body (IM) may be damaged by friction with the object to be heated (HO), etc., so a separate protective layer (not shown) may be required, and in this case, there are disadvantages such as difficulty in the manufacturing process and increased costs.

In addition, as shown in FIG. 4, when the intermediate heating body (IM) is coated on the lower surface of the top plate (15), some of the heat generated from the intermediate heating body (IM) is transferred to the top plate (15), causing heat loss, and thus reducing the heating efficiency.

Therefore, the cooktop (10) according to the embodiment of the present disclosure can be formed by processing a part of the top plate (15) to be perforated and then arranged so that the intermediate heating body and the insulating material are placed. The top plate (15) formed to be arranged with the intermediate heating body and the insulating material described below is called a plate (200), but this is only for the convenience of explanation, and therefore it is reasonable that it is not limited thereto.

Here, the intermediate heating body is the same as the intermediate heating body (IM) described above, and can form at least a part of the upper surface of the top plate. The insulating material is for blocking the heat generated from the intermediate heating body from being transferred to the supporter (230), etc., and can be arranged to be in contact with at least one surface of the intermediate heating body.

In addition, this plate (200) can further include a supporter for supporting at least one of the intermediate heating body, the insulating material, or the object to be heated (HO) .

The supporter can be a member for supporting the object to be heated (HO). The supporter can be formed of a non-metallic material. For example, at least a part of the supporter can be formed of glass, etc.

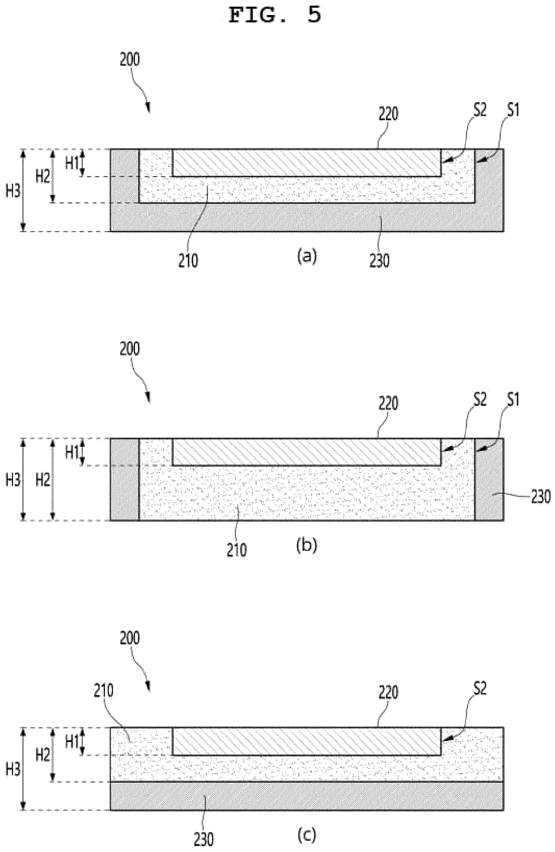

Next, referring to FIGS. 5 to 8, a plate (200) according to an embodiment of the present disclosure will be described in detail. FIGS. 5 to 8 are cross-sectional views of plates according to various embodiments of the present disclosure.

First, referring to FIG. 5, a plate (200) according to the first to third embodiments will be described.

FIG. 5 is a cross-sectional view illustrating a plate according to the first to third embodiments of the present disclosure.

According to the first to third embodiments, an insulating material (210) may form at least a portion of an upper surface of the plate (200). At least a portion of the insulating material (210) may be arranged between the supporter (230) and the intermediate heating body (220). The insulating material (210) may be arranged to surround an area excluding the upper surface of the intermediate heating body (220). The insulating material (210) may be arranged to be accommodated in the supporter (230).

The horizontal cross-section of the intermediate heating body (220) may have a circular shape. The intermediate heating body (220) may be arranged to be accommodated in the insulating material (210). The height (H1) of the intermediate heating body (220) may be lower than the maximum height (H2) of the insulating material (210).

In addition, a second receiving portion (S2) in which the intermediate heating body (220) is accommodated may be formed in the insulating material (210). The second receiving portion (S2) may be formed as a groove. The second receiving portion (S2) may be a space with an open upper surface. The second receiving portion (S2) may be a recessed portion that is sunken from top to bottom.

The horizontal cross-section of the second receiving portion (S2) may include a pattern shape having a closed loop. According to the example of FIG. 5, the pattern shape having a closed loop may be a circular shape, and in this case, the horizontal cross-section of the second receiving portion (S2) may have a circular shape. However, this is merely exemplary, and the pattern shape having a closed loop may further include at least one of a plurality of ring shapes, oval shapes, or square shapes. That is, the horizontal cross-section of the second receiving portion (S2) may have at least one of a plurality of ring shapes, oval shapes, or square shapes. That is, the shape of the horizontal cross-section of the second receiving portion (S2) may vary.

Specifically, the plate (200) according to the first embodiment of the present disclosure will be described in detail. As shown in (a) of FIG. 5, a first receiving portion (S1) may be formed in the supporter (230) in which at least one of the insulating material (210) and the intermediate heating body (220) is received. The first receiving portion (S1) formed in the supporter (230) may be formed as a groove. The first receiving portion (S1) may be a space with an open upper surface. The first receiving portion (S1) may be a recessed portion that is sunken from top to bottom. The horizontal cross-section of the first receiving portion (S1) may have a circular shape.

The maximum height (H2) of the insulating material (210) may be lower than the maximum height (H3) of the supporter (230).

In summary, the plate (200) according to the first embodiment can have the supporter (230) form the side and bottom of the plate (200). In this case, the insulating material (210) and the intermediate heating body (220) have the advantage that the remaining surface except the upper surface can be protected by the supporter (230).

In addition, the insulating material (210) can be placed on the inner side of the supporter (230), and the intermediate heating body (220) can be placed on the inner side of the insulating material (210). Accordingly, the intermediate heating body (220) can be formed so that the remaining surface except the upper surface where the object to be heated (HO) is placed is in contact with the insulating material (210). Accordingly, the effect of blocking the heat generated from the intermediate heating body (220) from being transferred to the supporter (230) is improved, and accordingly, the heat generated from the intermediate heating body (220) can be intensively transferred to the object to be heated (HO).

Next, the plate (200) according to the second embodiment of the present disclosure will be described in detail. As shown in (b) of FIG. 5, a first receiving portion (S1) in which at least one of the insulating material (210) and the intermediate heating body (220) is received may be formed in the supporter (230). The first receiving portion (S1) formed in the supporter (230) may be a hole shape that penetrates vertically. For example, the first receiving portion (S1) may be formed in the center of the supporter (230). The first receiving portion (S1) may be formed by being perforated so as to penetrate vertically. The first receiving portion (S1) may be a space with an upper surface and a lower surface that are open. The horizontal cross-section of the first receiving portion (S1) may have a circular shape.

The maximum height (H2) of the insulating material (210) may be the same as the maximum height (H3) of the supporter (230).

In summary, the plate (200) according to the second embodiment may have the supporter (230) form the side of the plate (200). In this case, there is an advantage in that the material constituting the supporter (230) can be used to a minimum while supporting the object to be heated (HO) and protecting the side of the insulating material (210) and the intermediate heating body (220).

In addition, the insulating material (210) may be arranged on the inside of the supporter (230), and the intermediate heating body (220) may be arranged on the inside of the insulating material (210). Accordingly, the intermediate heating body (220) can be formed so that the remaining surface, except for the upper surface on which the object to be heated (HO) is placed, is in contact with the insulating material (210). Accordingly, the effect of blocking the heat generated from the intermediate heating body (220) from being transferred to the supporter (230) is improved, and accordingly, the heat generated from the intermediate heating body (220) can be intensively transferred to the object to be heated (HO).

Next, the plate (200) according to the third embodiment of the present disclosure will be described in detail. As shown in (c) of FIG. 5, an insulating material (210) may be arranged on the upper surface of the supporter (230).

(Revised description due to deletion of S1) The upper surface of the supporter (320) on which the insulating material (210) is arranged may have a horizontal plane shape. The horizontal cross-section of the supporter (320) on which the insulating material (210) is arranged may have a circular shape.

In summary, the plate (200) according to the third embodiment may have the supporter (230) form the lower portion of the plate (200). In this case, there is an advantage in that the supporter (230) can support and protect the insulating material (210) and the intermediate heating body (220) while simplifying the shape of the supporter (230).

And, an insulating material (210) may be placed on the upper side of the supporter (230), and an intermediate heating body (220) may be placed on the inner side of the insulating material (210). Accordingly, the intermediate heating body (220) may be formed so that the remaining surface except the upper surface on which the object to be heated (HO) is placed is in contact with the insulating material (210). Accordingly, the effect of blocking the heat generated from the intermediate heating body (220) from being transferred to the supporter (230) is improved, and accordingly, the heat generated from the intermediate heating body (220) may be intensively transferred to the object to be heated (HO).

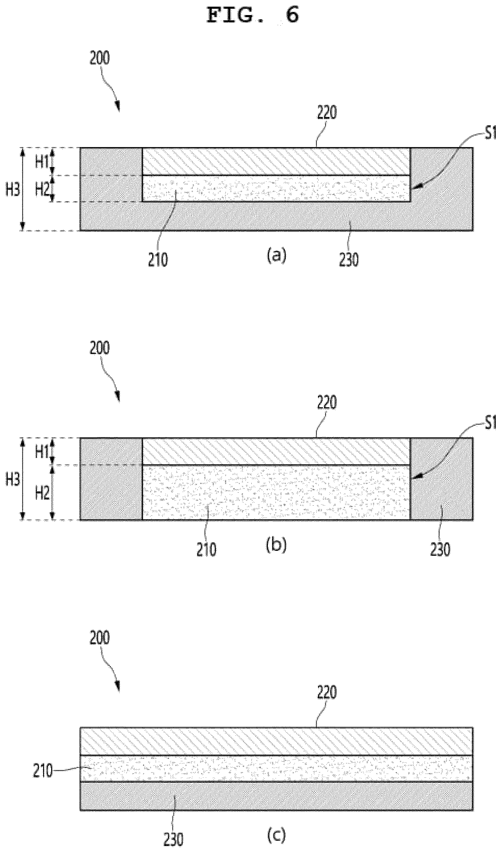

Next, referring to FIG. 6, a plate (200) according to the fourth to sixth embodiments will be described. FIG. 6 is a cross-sectional view illustrating a plate according to the fourth to sixth embodiments of the present disclosure.

According to the fourth to sixth embodiments, the lower surface of the intermediate heating body (220) may be placed in contact with the upper surface of the insulating material (210). The horizontal cross-section of the intermediate heating body (220) may have a circular shape.

The insulating material (210) may form at least a portion of the upper surface of the plate (200). The insulating material (210) may be arranged at least a portion between the supporter (230) and the intermediate heating body (200). The insulating material (210) may be arranged to surround the lower surface of the intermediate heating body (220). The upper surface of the insulating material (210) may have a horizontal plane shape. The horizontal cross-section of the insulating material (210) where the intermediate heating body (220) is arranged may have a circular shape.

Specifically, the plate (200) according to the fourth embodiment of the present disclosure will be described in detail. As shown in (a) of FIG. 6, the first receiving portion (S1) may be formed as a groove. The first receiving portion (S1) may be a space with an open upper surface. The first receiving portion (S1) may be a recessed portion that is recessed from top to bottom. The horizontal cross-section of the first receiving portion (S1) may have a circular shape.

The maximum height (H3) of the supporter (230) may be higher than the sum of the maximum height (H2) of the insulating material (210) and the maximum height (H1) of the intermediate heating body (220).

In summary, the plate (200) according to the fourth embodiment may have the supporter (230) form the side and bottom of the plate (200). In this case, there is an advantage in that the remainder except for the upper surface of the insulating material (210) and the side of the intermediate heating body (220) may be protected by the supporter (230).

In addition, the insulating material (210) may be arranged on the inner side of the supporter (230), and the intermediate heating body (220) may be arranged on the upper side of the insulating material (210). Accordingly, the intermediate heating body (220) may be formed so that its lower surface contacts the insulating material (210). Accordingly, the effect of blocking the heat generated from the intermediate heating body (220) from being transferred to the supporter (230) toward the lower side is improved, and accordingly, the heat generated from the intermediate heating body (220) may be intensively transferred to the object to be heated (HO).

Next, the plate (200) according to the fifth embodiment of the present disclosure will be described in detail. As shown in (b) of FIG. 6, the first receiving portion (S1) formed in the supporter (230) may be a hole shape that penetrates vertically. For example, the first receiving portion (S1) may be formed in the center of the supporter (230). The first receiving portion (S1) may be formed by perforating so as to penetrate vertically. The first receiving portion (S1) may be a space whose upper and lower surfaces are open. The horizontal cross-section of the first receiving portion (S1) may have a circular shape.

The maximum height (H3) of the supporter (230) may be equal to the sum of the maximum height (H2) of the insulating material (210) and the maximum height (H1) of the intermediate heating body (220).

In summary, the plate (200) according to the fifth embodiment may have the supporter (230) form the side of the plate (200). In this case, there is an advantage in that the object to be heated (HO) can be supported while using a minimum amount of material forming the supporter (230), and the side of the insulating material (210) and the intermediate heating body (220) can be protected by the supporter (230).

In addition, an insulating material (210) may be placed on the inside of the supporter (230), and an intermediate heating body (220) may be placed on the upper side of the insulating material (210). Accordingly, the intermediate heating body (220) may be formed so that the lower side on which the object to be heated (HO) is placed is in contact with the insulating material (210). Accordingly, the effect of blocking heat generated from the intermediate heating body (220) from being lost to the lower side is improved, and accordingly, the heat generated from the intermediate heating body (220) may be intensively transferred to the object to be heated (HO).

Next, the plate (200) according to the sixth embodiment of the present disclosure will be described in detail. As shown in (c) of FIG. 6, the intermediate heating body (220) may be arranged to form the entire upper surface of the plate (200) .

The lower surface of the insulating material (210) may be arranged to be in contact with the upper surface of the supporter (230).

In summary, the plate (200) according to the sixth embodiment may have the supporter (230) form the lower portion of the plate (200). In this case, there is an advantage in that the shape of the supporter (230) can be simplified while protecting the lower portion of the insulating material (210) and the lower portion of the intermediate heating body (220).

And, an insulating material (210) is arranged on the upper side of the supporter (230), and an intermediate heating body (220) can be arranged on the upper side of the insulating material (210). Accordingly, the lower side of the intermediate heating body (220) can contact the insulating material (210) and form the entire upper surface of the plate (200). Accordingly, the heating area of the intermediate heating body (220) is maximized, and at the same time, the effect of blocking the heat generated from the intermediate heating body (220) from being transferred to the supporter (230) is improved, and accordingly, the heat generated from the intermediate heating body (220) can efficiently heat the object to be heated (HO) even when the area of the object to be heated (HO) is relatively wide.

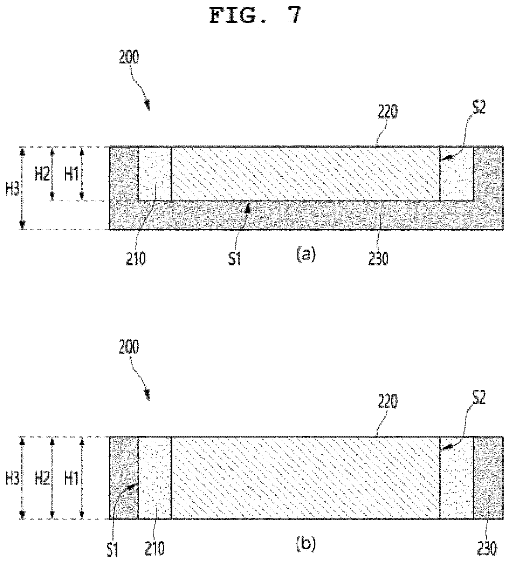

Next, referring to FIG. 7, a plate (200) according to the seventh to eighth embodiments will be described. FIG. 7 is a cross-sectional view illustrating a plate according to the seventh to eighth embodiments of the present disclosure.

According to the seventh to eighth embodiments, the insulating material (210) may form at least a portion of the upper surface of the plate (200). The insulating material (210) may be arranged between the intermediate heating body (220) and the supporter (230). The insulating material (210) may be arranged to surround the side of the intermediate heating body (220). The insulating material (210) may be arranged to be accommodated in the supporter (230).

The intermediate heating body (220) may form at least a portion of the upper surface of the plate (200). The horizontal cross-section of the intermediate heating body (200) may have a circular shape. The maximum height (H1) of the intermediate heating body (220) may be equal to the maximum height (H2) of the insulating material (210). The intermediate heating body (220) may be arranged to be accommodated in the insulating material (210).

A first receiving portion (S1) may be formed in the supporter (230) to receive at least one of the intermediate heating body (220) and the insulating material (210).

A second receiving portion (S2) may be formed in the insulating material (210) to receive the intermediate heating body (220). The second receiving portion (S2) may be a hole shape that penetrates vertically. For example, the second receiving portion (S2) may be formed in the center of the insulating material (210). The second receiving portion (S2) may be formed by perforating so as to penetrate vertically. The second receiving portion (S2) may be a space with open upper and lower surfaces. The horizontal cross-section of the second receiving portion (S2) may have a circular shape.

In detail, a plate (200) according to the seventh embodiment of the present disclosure will be described in detail. As shown in (a) of FIG. 7, the first receiving portion (S1) formed in the supporter (230) may be formed as a groove. The first receiving portion (S1) may be a space with an open upper surface. The first receiving portion (S1) may be a recessed portion that is sunken from top to bottom. The horizontal cross-section of the first receiving portion (S1) may have a circular shape.

The maximum height (H2) of the insulating material (210) may be the same as the maximum height (H1) of the intermediate heating body (220). In addition, the maximum height (H2) of the insulating material (210) may be lower than the maximum height (H3) of the supporter (230).

In summary, the plate (200) according to the seventh embodiment may have the supporter (230) form the side and bottom of the plate (200). In this case, there is an advantage that the side and bottom of the insulating material (210) and the intermediate heating body (220) can be protected by the supporter (230).

In addition, the insulating material (210) can be placed on the inside of the supporter (230), and the intermediate heating body (220) can be placed on the inside of the insulating material (210). Accordingly, the intermediate heating body (220) can be formed so that the side is in contact with the insulating material (210). Accordingly, the effect of blocking the heat generated from the intermediate heating body (220) and being transferred to the side to the supporter (230) is improved, and accordingly, the heat generated from the intermediate heating body (220) can be intensively transferred to the object to be heated (HO).

Next, the plate (200) according to the eighth embodiment of the present disclosure will be described in detail. As shown in (b) of FIG. 7, the first receiving portion (S1) formed in the supporter (230) may be a hole shape that penetrates vertically. For example, the first receiving portion (S1) may be formed in the center of the supporter (230). The first receiving portion (S1) may be formed by perforating so as to penetrate vertically. The first receiving portion (S1) may be a space with open upper and lower surfaces. The horizontal cross-section of the first receiving portion (S1) may have a circular shape.

The maximum height (H2) of the insulating material (210) may be the same as the maximum height (H1) of the intermediate heating body (220). The maximum height (H2) of the insulating material (210) may be the same as the maximum height (H3) of the supporter (230).

In summary, the plate (200) according to the eighth embodiment can have the supporter (230) form the side of the plate (200). In this case, there is an advantage in that the side of the insulating material (210) and the side of the intermediate heating body (220) can be protected by the supporter (230) while using the supporter (230) to a minimum.

In addition, the insulating material (210) can be placed on the inside of the supporter (230), and the intermediate heating body (220) can be placed on the inside of the insulating material (210). Accordingly, the intermediate heating body (220) can be formed so that the side is in contact with the insulating material (210). Accordingly, the effect of blocking the heat generated from the intermediate heating body (220) from being lost laterally to the supporter (230) is improved, and accordingly, the heat generated from the intermediate heating body (220) can be intensively transferred to the object to be heated (HO).

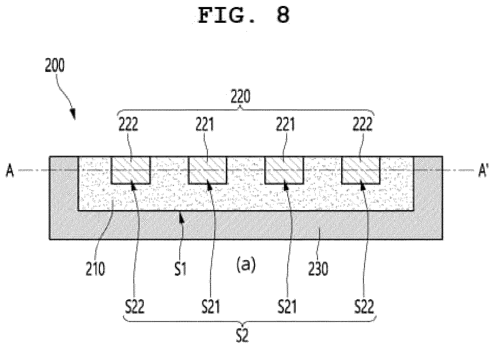

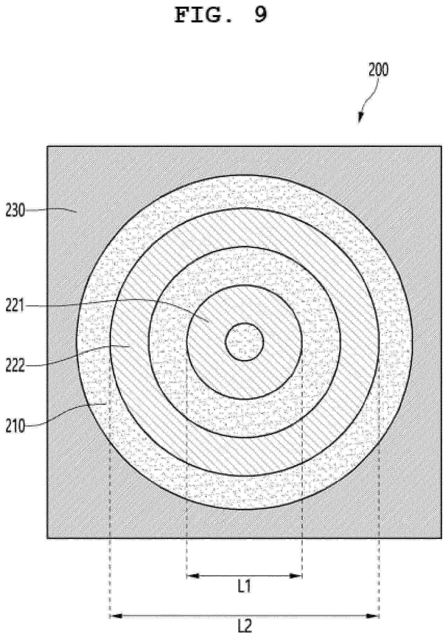

Next, referring to FIGS. 8 and 9, a plate (200) according to the ninth embodiment will be described.

Meanwhile, since the supporter (230) is the same as described in (a) of FIG. 5, a redundant description will be omitted. Hereinafter, the intermediate heating body (220) and the insulating material (210) will be described in detail.

FIG. 8 is a cross-sectional view of a plate according to the ninth embodiment of the present disclosure.

The intermediate heating body (220) may include a first heating member (221) and a second heating member (222). That is, the intermediate heating body (220) may be composed of a plurality of heating members that are separated from each other.

And, the horizontal cross section of the intermediate heating body (220) may have at least one ring shape. At least a part of the insulating material may be arranged between the first heating member (221) and the second heating member (222).

Specifically, the first heating member (221) and the second heating member (222) may be ring-shaped. The diameter (L1) of the first heating member (221) may be smaller than the diameter (L2) of the second heating member (222). That is, the first heating member (221) may be smaller than the second heating member (222). Therefore, the first heating member (221) may be located inside the second heating member (222).

The insulating material (210) may be arranged to surround an area excluding the upper surface of the first heating member (221) and the upper surface of the second heating member (222). At least a portion of the insulating material (210) may be arranged between the intermediate heating body (220) and the supporter (230). A second receiving portion (S2) in which the intermediate heating body (220) is received may be formed in the insulating material (210). The horizontal cross-sectional shape of the second receiving portion (S2) may be the same as or larger than the horizontal cross-sectional shape of the intermediate heating body (220).

The second receiving portion (S2) may be formed as a groove. The second receiving portion (S2) may be a space with an open upper surface. The second receiving portion (S2) may be a recessed portion that is recessed from top to bottom. The horizontal cross-section of the second receiving portion (S2) may have at least one ring shape. The horizontal cross-section of the second receiving portion (S2) may have two or more ring shapes. This will be described in detail with reference to FIG. 9.

FIG. 9 is a cross-sectional view taken along line A-A' of FIG. 8.

The horizontal cross-section of the second receiving portion (S2) may have a first ring shape having a first length (L1) and a second ring shape having a second length (L2). In this case, the second length (L2) may be longer than the first length (L1), and thus the first ring shape may be formed within the second ring shape.

Specifically, the second receiving portion (S2) may be divided into a first heating member receiving portion (S21) in which the first heating member (221) is received, and a second heating member receiving portion (S22) in which the second heating member (222) is received. The horizontal cross-section of the first heating member receiving portion (S21) may have a first ring shape, and the horizontal cross-section of the second heating member receiving portion (S22) may have a second ring shape, and the second ring shape may be larger than the first ring shape.

In summary, the plate (200) may be formed in such a way that the first heating member (221) in the shape of a ring and the second heating member (222) in the shape of a ring are each separated and received in the insulating material (210), and the insulating material (210) is received in the supporter (230).

In this way, when the intermediate heating body (220) is composed of a plurality of ring-shaped heating members (221) (222), as described later in FIG. 11, there is an advantage in that the magnetic field concentration area is adjusted to the intermediate heating body (220) or the object to be heated (HO) when the phase is controlled by a plurality of working coils (WC1) (WC2). That is, when the intermediate heating body (220) is composed of a plurality of ring-shaped heating elements (221) (222), there is an advantage in that when the object to be heated (HO) is a magnetic body, the magnetic field generated from the working coil (WC1) (WC2) is concentrated on the object to be heated (HO), and when the object to be heated (HO) is a non-magnetic body, the magnetic field generated from the working coil (WC1) (WC2) is concentrated on the intermediate heating body (220).

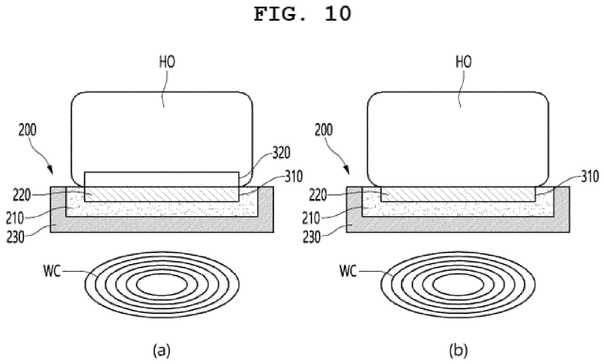

FIG. 10 is a drawing illustrating a heating point when a cooktop according to an embodiment of the present disclosure heats an object to be heated.

FIG. 10 illustrates the heating point by using the cooktop (1) according to the first embodiment described in (a) of FIG. 5 as an example, and the heating principle is the same for the cooktops (1) according to the remaining embodiments, so redundant descriptions will be omitted.

FIG. 10 assumes that the working coil (WC) is a single coil.

(a) of FIG. 10 illustrates a heating area when the object to be heated (HO) is a magnetic body, and (b) of FIG. 10 is a cross-sectional view illustrating the location of the heating point when the object to be heated (HO) is a non-magnetic body.

First, when explaining the case where the object to be heated (H0) is a magnetic body, the magnetic field generated from the working coil (WC) can be coupled with the object to be heated (HO) and the intermediate heating body (220). Accordingly, the intermediate heating body (220) can be intensively heated in the first heating area (310), and the object to be heated (HO) can be intensively heated in the second heating area (320). The first heating area (310) can be the entire intermediate heating body (220). The second heating area (320) can be the lower part of the object to be heated (HO).

Next, when explaining the case where the object to be heated (H0) is a non-magnetic body, the magnetic field generated from the working coil (WC) can be coupled with the intermediate heating body (220). Accordingly, the intermediate heating body (220) can be intensively heated in the first heating area (310). The first heating area (310) may be the entire intermediate heating body (220).

As described above, according to the embodiment of the present disclosure, the first heating area (310) is heated regardless of the type of the object to be heated (HO). At this time, the heat generated in the first heating area (310) is minimized from heat transfer to both sides and the lower direction by the insulating material (210), and is intensively transferred to the object to be heated (HO) located on the upper side, so there is an advantage of minimizing heat loss.

Meanwhile, as in (a) of FIG. 10, when the object to be heated (HO) is a magnetic body, a part of the magnetic field is coupled with the intermediate heating body (220), but the heating efficiency is improved when coupled with the object to be heated (HO). A method for this will be described with reference to FIGS. 11 to 13.

FIG. 11 is a drawing illustrating a heating area when a cooktop (1) according to an embodiment of the present disclosure heats an object to be heated (HO). Specifically, (a) of FIG. 11 illustrates a heating area when the object to be heated (HO) is a magnetic body, and (b) of FIG. 11 is a cross-sectional view illustrating a heating area when the object to be heated (HO) is a non-magnetic body.

In FIG. 11, the heating area is explained using the cooktop (1) according to the 9th embodiment described in FIGS. 8 to 9 as an example, and the heating principle is the same for the cooktops (1) according to the remaining embodiments, so redundant descriptions will be omitted.

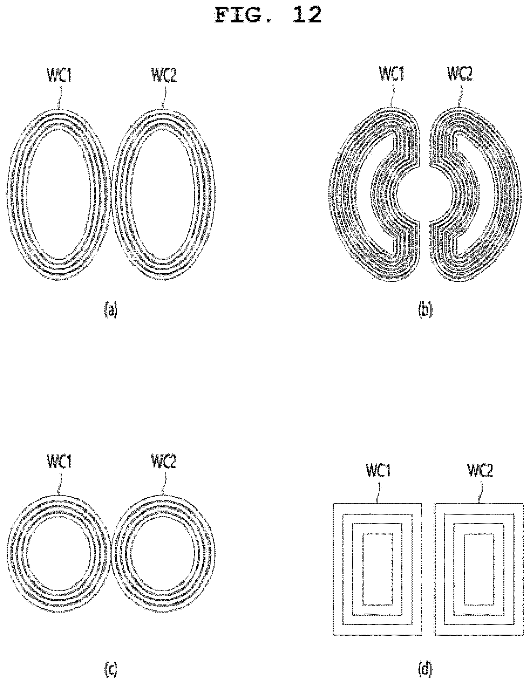

According to one embodiment of the present disclosure, the cooktop (1) is provided with a plurality of working coils (WC), and the heating amount of the intermediate heating body (IM) can be adjusted by controlling the phases of the plurality of working coils (WC). This will be explained with reference to FIG. 11, and in FIG. 11, it is assumed that two working coils (WC) are arranged in parallel. In addition, as in the example of FIG. 11, each of the two working coils (WC) may have a semicircular shape, and at least a part of the surface facing the other working coil may be formed concavely inward, but this is only an example, and it is reasonable that it is not limited thereto. Specifically, the two working coils (WC) are not limited to the shape illustrated in FIG. 11, and may be formed in various shapes as illustrated in FIG. 12.

FIG. 12 illustrates various examples in which the working coil (WC) includes first and second working coils (WC1) (WC2), and the first and second working coils (WC1) (WC2) are arranged in parallel.

For example, the working coil (WC) may be formed in an oval shape as illustrated in (a) of FIG. 12. Alternatively, the working coil (WC) may be formed in a crescent shape as illustrated in (b) of FIG. 12, but at least a portion of the surface adjacent to the other working coil may be formed in a concave shape. The working coil (WC) may be formed in a circular shape as illustrated in (c) of FIG. 12. The working coil (WC) may be formed in a square shape as illustrated in (d) of FIG. 12.

However, the shape of the working coil (WC) described above is only an example, and the shapes of the first working coil (WC1) and the second working coil (WC2) constituting the working coil (WC) may vary.

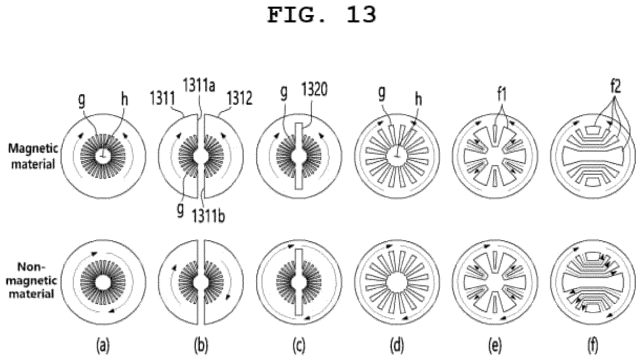

In addition, FIG. 13 illustrates various examples of intermediate heating bodies (220) installed together when a plurality of working coils is arranged in a parallel manner, as in the example of FIG. 12.

For example, as in (a) of FIG. 13, the intermediate heating body (IM) may have a circular shape with a hole (h) formed in the center, and a plurality of grooves (g) may be formed on the inside. As in (b) of FIG. 13, the intermediate heating body (IM) is divided into two members (1311) (1312), and each of the two members (1311) (1312) may have a semicircular shape. In addition, each of the two absences may have a concave center formed among the surfaces (1311a) (1311b) corresponding to different absences, and a plurality of grooves (g) may be formed around the center. As shown in (c) of FIG. 13, the intermediate heating body (IM) may have a long penetrating portion (1320) formed in one direction inside, a hole formed in the center is larger than the periphery of the penetrating portion, and a plurality of grooves (g) may be formed around the center. As shown in (d) of FIG. 13, the intermediate heating body (IM) may have a circular shape with a hole (h) formed in the center, and a plurality of grooves (g) may be formed toward the outer circumference from the hole (h) formed in the center. At this time, the length of the plurality of grooves (g) may be longer than the radius of the intermediate heating body (IM). That is, the intermediate heating body (IM) illustrated in (a) of FIG. 13 may have a groove (g) whose length is shorter than the radius length, and the intermediate heating body (IM) illustrated in (b) of FIG. 13 may have a groove (g) whose length is longer than the radius length.

In addition, as in (e) or (f) of FIG. 13, the groove (f1) (f2) may be formed in a pattern that allows the intermediate heating body (IM) to have multiple paths, that is, a path along the outer circumference where the induced current flows and a path flowing from the inside. In particular, as in (e) of FIG. 13, the groove (f1) may be formed in a pattern where the induced current flowing from the inside has a path in the shape of a circle, an ellipse, or a square, or as in (f) of FIG. 13, the groove (f2) may be formed in a pattern where the induced current flowing from the inside has a path in the shape of a circle, an ellipse, or a square, or may be formed in a pattern where the groove has a long path in one direction.

As shown in (a) to (d) of FIG. 13, when the intermediate heating body (220) has a plurality of grooves (h) around the center, the heating area becomes wider than when it is a simple ring shape, so that the heating efficiency for a non-magnetic body can be increased.

As shown in (e) and (f) of FIG. 13, when the induced current flows not only along the outer circumference but also on the inner side, there is an advantage in that the heating performance for each type of object to be heated (HO) is increased. In addition, there is an advantage in that even a small-sized object to be heated (HO) can be heated through the loop formed by the current flowing on the inner side.

Meanwhile, the above-described embodiments are merely examples for the convenience of explanation, and therefore, it is reasonable that they are not limited thereto.

That is, in order to operate as in the embodiment of FIG. 11, the first working coil (WC1) and the second working coil (WC2) are arranged in parallel on the left and right, and the intermediate heating body (220) may have a shape in which at least the center is penetrated. It may be preferable that the intermediate heating body (220) is formed in at least one ring shape. However, according to the embodiment, the intermediate heating body (220) in the ring shape may have at least one groove formed around the center so as to have a specific pattern.

The inverter (not shown) may control the current flowing in the first working coil (WC1) and the second working coil (WC2) so that the heat generation amount in the intermediate heating body (220) changes depending on the type of the object to be heated (HO).

The inverter (not shown) can be driven so that the direction of the current flowing in the first working coil (WC1) and the direction of the current flowing in the second working coil (WC2) are different when the object to be heated (HO) is a magnetic body. For example, the current may flow clockwise in the first working coil (WC1), and the current may flow counterclockwise in the second working coil (WC2). In other words, the phase difference between the current flowing in the first working coil (WC1) and the current flowing in the second working coil (WC2) may be 180 degrees. In this case, since the magnetic fields of the areas where the currents face each other are canceled, the magnetic fields generated in the first and second working coils (WC1) (WC2) may be concentrated in the area between the first heating member (221) and the second heating member (222). Therefore, the magnetic field generated from the first and second working coils (WC1) (WC2) can pass between the first heating member (221) and the second heating member (222) to directly heat the object to be heated (HO).

Therefore, as shown in (a) of FIG. 11, the magnetic field generated from the working coil (WC) combines with the object to be heated (HO) and the intermediate heating body (220) respectively to heat the first heating area (310) and the second heating area (320), but can concentrate heating on the second heating area (320) rather than the first heating area (310). Here, the first heating area (310) may be the entire intermediate heating body (220), and the second heating area (320) may be the lower part of the object to be heated (HO).

On the other hand, when the object to be heated (HO) is a non-magnetic material, the direction of the current flowing in the first working coil (WC1) and the direction of the current flowing in the second working coil (WC2) can be driven so that they are the same. For example, the current can flow clockwise in each of the first working coil (WC1) and the second working coil (WC2). In other words, the phase difference between the current flowing in the first working coil (WC1) and the current flowing in the second working coil (WC2) can be 0 degrees. In this case, since the magnetic fields of the areas where the currents face each other are canceled, the magnetic fields generated in the first and second working coils (WC1) (WC2) can be concentrated on the first heating member (221) and the second heating member (222), respectively. Therefore, the magnetic fields generated in the first and second working coils (WC1) (WC2) can intensively heat the first heating member (221) and the second heating member (222).

Therefore, the magnetic fields generated from the first and second working coils (WC1) (WC2) are concentrated on the first heating member (221) and the second heating member (222), respectively, and therefore, the first heating member (221) and the second heating member (222) heated by the magnetic field can heat the object to be heated (HO).

Therefore, as shown in (b) of FIG. 11, the magnetic field generated from the working coil (WC) can be intensively coupled with the intermediate heating body (220). Accordingly, the first heating area (310) can be intensively heated.

In summary, the heating amount in the intermediate heating body (220) can be controlled by controlling the direction, i.e., the phase, of the current flowing in the first working coil (WC1) and the second working coil (WC2) depending on the type of the object to be heated (HO), thereby efficiently heating the object to be heated (HO). In addition, as described above, since the first heating area (310) faces the insulating material (210) except for the upper surface, the heat generated in the first heating area (310) is minimized in the heat transfer to both sides and the lower direction, and is intensively transferred to the object to be heated (HO) located on the upper side, so there is an advantage of minimizing heat loss. That is, compared to the case illustrated in FIG. 10, in the case of a magnetic body, the magnetic field can be concentrated on the object to be heated (HO), and in the case of a non-magnetic body, the magnetic field can be concentrated on the intermediate heating body (210), and at the same time, the heat generated in the intermediate heating body (210) can be intensively transferred to the object to be heated (HO).

The above description is merely an example of the technical idea of the present disclosure, and those with ordinary knowledge in the technical field to which the present disclosure belongs may make various modifications and variations without departing from the essential characteristics of the present disclosure.

Therefore, the embodiments disclosed in the present disclosure are not intended to limit the technical idea of the present disclosure but to explain it, and the scope of the technical idea of the present disclosure is not limited by these embodiments.

The protection scope of the present disclosure should be interpreted by the claims below, and all technical ideas within the equivalent scope should be interpreted as being included in the scope of the rights of the present disclosure.

## Claims

1. An induction heating type cooktop comprising:
a plate on which an object to be heated is placed;
a working coil generating a magnetic field for heating the object to be heated; and
an inverter configured to control a current flowing through the working coil,
wherein the plate includes:
a supporter being made of a non-metallic material,
an intermediate heating body forming at least a portion of an upper surface of a top plate, and
an insulating material arranged to be in contact with at least one surface of the intermediate heating body.

2. The induction heating type cooktop of claim 1, wherein the insulating material is arranged between the supporter and the intermediate heating body.

3. The induction heating type cooktop of claim 1, wherein the insulating material is arranged to surround at least a portion of the side and lower surfaces of the intermediate heating body.

4. The induction heating type cooktop of claim 1, wherein the insulating material is arranged to surround an area excluding the upper surface of the intermediate heating body.

5. The induction heating type cooktop of claim 1, wherein the supporter has a first receiving portion formed to receive at least one of the intermediate heating body and the insulating material.

6. The induction heating type cooktop of claim 5, wherein the first receiving portion is formed as a groove.

7. The induction heating type cooktop of claim 1, wherein the insulating material has a second receiving portion formed to receive the intermediate heating body.

8. The induction heating type cooktop of claim 7, wherein the horizontal cross-section of the second receiving portion includes a pattern shape having a closed loop.

9. The induction heating type cooktop of claim 7, wherein the horizontal cross-section of the second receiving portion has at least one ring shape.

10. The induction heating type cooktop of claim 1, wherein the intermediate heating body includes a first heating member and a second heating member, and at least a part of the insulating material is arranged between the first heating member and the second heating member.

11. The induction heating type cooktop of claim 9, wherein the horizontal cross-section of the second receiving portion has a first ring shape having a first length in diameter and a second ring shape having a longer diameter than the first length, and the first ring shape is formed within the second ring shape.

12. The induction heating type cooktop of claim 11, wherein the working coil includes first and second working coils, and the inverter is configured to control the direction of the current flowing in the first and second working coils.

13. The induction heating type cooktop of claim 1, wherein at least a portion of the supporter is formed of glass.

14. The induction heating type cooktop of claim 1, wherein the maximum height of the insulating material is lower than the maximum height of the supporter.

15. The induction heating type cooktop of claim 1, wherein the maximum height of the insulating material is the same as the maximum height of the supporter.
